# EUROPEAN PATENT APPLICATION

(11) **EP 3 050 800 A1**
(43) Date of publication of application: **03.08.2016**
(21) Application number: 15152806.4
(22) Date of filing: 28.01.2015
(51) Int. Cl.: B64D 11/06

(54) **Power socket with wireless communication module, vehicle seat with power socket and method for operating a power socket**

(71) Applicant: KID-Systeme GmbH, 21614 Buxtehude (DE)
(72) Inventor: Rittner, Ulrich, 21614 Buxtehude (DE)
(74) Representative: Isarpatent

(57) **Abstract**

A power socket, particularly for use in vehicle seat, includes a socket housing, a power supply interface configured to receive electrical power from an external power supply, a power outlet arranged within the socket housing and configured to provide electrical power received from the external power supply to an electrical device plugged in at the power outlet, a wireless communication module arranged within the socket housing, and at least one manual control element connected to the wireless communication module and arranged in the socket housing, the manual control element being configured to control the wireless communication module to wirelessly transmit at least one control signal upon manual activation to a wireless receiver.

## Description

### FIELD OF THE INVENTION

The present invention pertains to a power socket with a wireless communication module, a vehicle seat with such a power socket, and a method for operating a power socket, in particular for use in seats in aircraft or spacecraft.

Although applicable for any kind of vehicle seat, the present invention and the corresponding underlying problems will be explained in further detail in conjunction with an aircraft.

### BACKGROUND OF THE INVENTION

Passengers of vehicles are provided with multiple opportunities to individually and dynamically configure the vehicle seat environment. Particularly in aircraft, passengers are able to selectively activate an individual reading light for their respective seat or to set off a call for assistance by a flight attendant (a so-called PAX call). To this end, control or activation elements are integrated into the vehicle near or at the seat. Due to the high modularity and variability of contemporary seating components in vehicles, an integration of new design approaches into existing vehicle structures becomes more complex as well.

Personal electronic devices (PEDs) become increasingly widespread. Usually those PEDs get carried around along with the user wherever he travels, including on board of aircraft. For the comfort of passengers, is desirable to provide passengers on board an aircraft with opportunities to recharge the electrical energy storages of the PEDs during their sojourn on board of the aircraft. Airlines usually offer charging facilities for PEDs, such as laptops, mobile phones, smartphones, tablet PCs and the like, utilizing USB ports or power grid connectors for each passenger individually at their respective aircraft seat.

The document DE 10 2012 217 797 A1 for example discloses an aircraft seat with an integrated communication terminal that provides a power receptacle and a service selection input area. The document DE 20 2012 100 893 U1 discloses a power receptacle that is switchable via wireless communication signals.

### SUMMARY OF THE INVENTION

It is one object of the invention to increase the flexibility in designing and integrating passenger control elements for vehicle seats. It would be particularly desirable to find solutions for modular vehicle seats without hardwired connections to a control network of the vehicle.

According to a first aspect of the invention, a power socket, particularly for use in vehicle seat, includes a socket housing, a power supply interface configured to receive electrical power from an external power supply, a power outlet arranged within the socket housing and configured to provide electrical power received from the external power supply to an electrical device plugged in at the power outlet, a wireless communication module arranged within the socket housing, and at least one manual control element connected to the wireless communication module and arranged in the socket housing, the manual control element being configured to control the wireless communication module to wirelessly transmit at least one control signal upon manual activation to a wireless receiver.

According to a second aspect of the invention, a vehicle seat comprises a power socket according to the first aspect of the invention.

According to a third aspect of the invention, an aircraft comprises at least one vehicle seat according to the second aspect of the invention.

According to a fourth aspect of the invention, a method for operating a power socket comprises providing electric power to an electric device via a power outlet arranged within a socket housing of the power socket; detecting a manual activation of at least one manual control element arranged in the socket housing; and wirelessly transmitting at least one control signal upon the detected manual activation to a wireless receiver via a wireless communication module arranged within the socket housing.

One idea of the present invention is to equip a power socket for providing electrical power to electrical devices plugged into the power socket with manual control elements which enable a user of the power socket to wirelessly transmit individual control signals to remote system components assigned to the specific power socket. A great advantage of wireless communication is the flexibility in arrangement of the power socket with respect to the location of the remote system components controlled with the power socket. For example, power sockets in aircraft enhanced with the functionality of being able to set off PAX calls or to activate the seat reading light may be placed mainly for convenient usage by the passenger rather than depending on the arrangement of wiring and cables in the seat.

According to an embodiment of the power socket, the at least one manual control element may comprise one or more of a slider and a pushbutton. Such control elements are easy to operate by a passenger and are suitable for binary operations such as PAX calls or activation of an overhead reading light.

According to a further embodiment of the power socket, the wireless communication module may comprise a Bluetooth® Low Energy (BTLE) transmitter. Such BTLE transmitters, or BTLE beacons, advantageously consume little energy and are sufficient for data transmission over distances of a few metres. Moreover, the BTLE beacons may advantageously pre-configured according to standardized communication protocols so that aircraft servers may be easily configured for parsing control signals transmitted by the power socket.

According to a further embodiment of the power socket, the wireless communication module may be electrically connected to the power supply interface. The electrical energy needed for operation of the wireless communication module may in this case advantageously be retrieved from the power supply supplying the power outlet.

According to a further embodiment of the power socket, the power socket may further comprise an electric energy storage coupled to the wireless communication module and configured to supply electric power to the wireless communication module. In this alternative variant, the wireless communication module may operate independently of the power supply of the power outlet. Specifically, since the energy consumption of the wireless communication module is generally low, an electric energy storage such as a battery may last for a long time, leading to advantageously low maintenance effort.

According to a further embodiment of the power socket, the power socket may further comprise an energy harvesting device coupled to the wireless communication module and configured to transform kinetic energy generated by a user actuating the at least one manual control element to electric energy for the wireless communication module. This is particularly helpful since it may reduce the maintenance effort even further. The wireless communication module may operate completely self-sustaining without the need for energy supply from a battery or an external power supply.

According to an embodiment of the vehicle seat, the vehicle seat may further comprise a seat belt with a seat belt clasp, wherein the power socket is integrated into the seat belt clasp. The seat belt clasp is a convenient place to arrange the power socket since it will always be in reach of the passenger. Moreover, this will encourage passengers to remain seated, advantageously with the seat belts closed.

According to a further embodiment of the vehicle seat, the power socket may have an energy harvesting device that is configured to transform kinetic energy generated by a user actuating the seat belt clasp to electric energy for the wireless communication module. The clasping action of the seat belt clasp usually generates enough kinetic energy and therefore electrical energy to send a beacon signal from the wireless communication module to the network server. This may aid flight attendants in determining whether a passenger is still sitting at his place or whether he might have temporarily gotten up.

Such vehicle seats may in particular embodiments be employed in an aircraft.

According to a further embodiment of the aircraft, the aircraft may comprise at least one wireless receiver installed in an aircraft passenger cabin of the aircraft and configured to wirelessly receive the at least one control signal transmitted by the wireless communication module of the power socket, and an aircraft server coupled to the at least one wireless receiver and configured to process the at least one control signal. The wireless receivers may be distributed in the cabin for good signal coverage so that the distance between the wireless communication modules and any one of the wireless receivers remains small in each case. This reduces energy consumption of the wireless communication modules, thereby aiding in prolonging battery life and decreasing signal strength of the wireless communication.

In one embodiment, the at least one wireless receiver may be a Bluetooth® Low Energy receiver.

### BRIEF DESCIRPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 illustrates a power socket in perspective view according to an embodiment of the invention.
Fig. 2 schematically illustrates a diagram for a power socket according to another embodiment of the invention.
Fig. 3 schematically illustrates a diagram for a power socket according to a further embodiment of the invention.
Fig. 4 schematically illustrates a diagram for a power socket according to yet another embodiment of the invention.
Fig. 5 schematically illustrates a cabin environment of an aircraft with aircraft seats having integrated power sockets according to a further embodiment of the invention.
Fig. 6 schematically illustrates an aircraft comprising a cabin environment according to Fig. 5 according to a further embodiment of the invention.
Fig. 7 schematically illustrates a flow diagram of a method for operating a power socket according to a further embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Power sockets within the meaning of the present invention may comprise any type of electrical receptacles, electric outlets, electric plug-sockets, electrical jack or similar egress port for provision of electric power. Power sockets within the meaning of the present invention are configured to receive a plug or other type of male electric connector in any type of shape or form fit to provide for a locking mechanisms preventing inadvertent disconnection or poor environmental sealing. Locking mechanism designs may include locking levers, screw locking, toggle locking or bayonet locking.

Personal electronic devices (PEDs) within the meaning of the present invention comprise all electronic devices which may be employed for entertainment, communication and/or office purposes. For example, PEDs may comprise all sorts of end terminals, such as laptops, mobile phones, smartphones, handheld devices, palmtops, tablet PCs, GPS devices, navigation devices, audio devices such as MP3 players, portable DVD or Bluray® players or digital cameras.

Vehicle seats within the meaning of the present invention may comprise any form of structural components of a vehicle which are intended to host a passenger for the duration of travel with the vehicle. In particular, vehicle seats in aircraft may be used personally and at least temporarily exclusively by the passenger of the aircraft during the flight. Seats within the meaning of the invention may be aircraft seats, but also loungers, armchairs, beds, suites of the first or royal class or similar seating furniture within an aircraft.

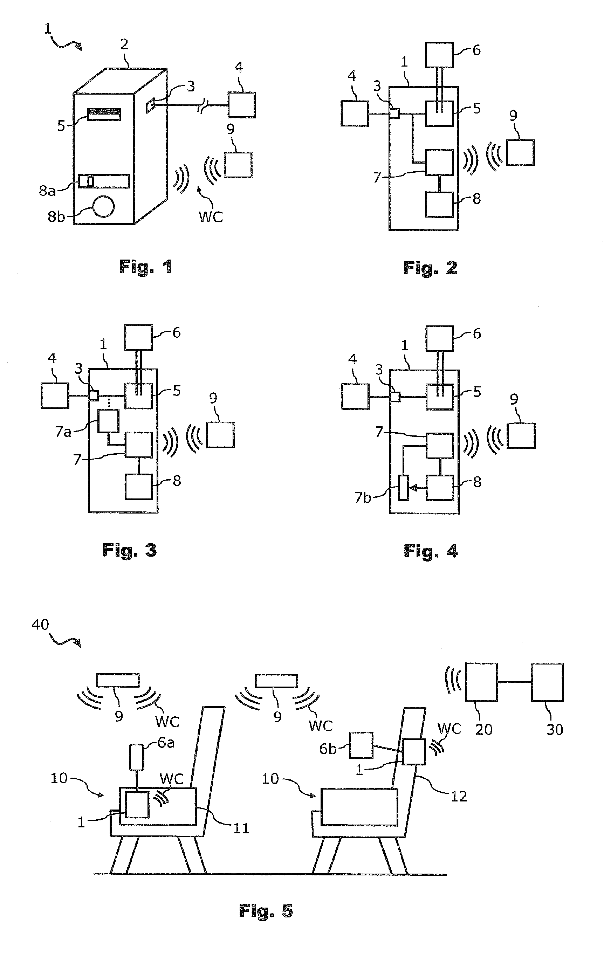

Fig. 1 illustrates a perspective view of a power socket 1 with a socket housing 2. The socket housing 2 may for example be cuboid in shape and may comprise a plastic or resin material, such as polycarbonate (PC) or acrylonitrile butadiene styrene (ABS). The socket housing 2 may have a power supply interface 3 in one of its outer surfaces that configured to receive electrical power from an external power supply 4 plugged in by cable or wiring to the socket housing 2. The power supplied by the external power supply 4 may be provided to a user at a power outlet 5 arranged within the socket housing 2, for example to an electrical device plugged in at the power outlet 5.

The external power supply 4 may for example be a low voltage power network in a vehicle, for example an aircraft 28VDC network. It may also be possible to provide AC power over the power outlet 5, such as 110VAC from an aircraft on-board electrical system 4. The power outlet 5 may for example be a conventional electrical socket for single phase commercial purposes which generally provides two or three electrical connections to the supply conductors. The power outlet 5 may also be a USB port for a USB cable to connect thereto.

Within the socket housing 2 a wireless communication module (not explicitly shown in Fig. 1) is arranged. On the outer surface of the socket housing 2, the power socket 1 may further comprise at least one manual control element that is connected to the wireless communication module. The manual control element(s) are configured to control the wireless communication module to wirelessly transmit at least one control signal upon manual activation to a wireless receiver 9. For example, the manual control element may comprise a slider 8a and/or a pushbutton 8b, as exemplarily depicted in Fig. 1. Of course, the type and kind of manual control element is not limited to those examples, and other manual control elements may equally be provided in the socket housing 2, as appropriate for the desired functionality.

Upon pressing the pushbutton 8b or sliding the slide 8a, the wireless communication module is triggered to emit a respective control signal. The wireless communication module may for example comprise a Bluetooth® Low Energy (BTLE) transmitter. BTLE is a wireless personal area network technology which provides considerably reduced power consumption and cost while maintaining a similar communication range as classic Bluetooth®. The wireless communication module may for example operate according to a specifically configured Generic Attribute (GATT) profile that enables to distribute identification tags to different wireless communication modules within the network and to distinguish client modules wirelessly connecting to a central server instance within the BTLE network.

The wireless communication module may for example employ a beacon technology where wireless communication modules within range of a wireless receiver 9 may be discovered using a standardized discovery process over wireless communication.

Figs. 2 to 4 show different connection diagrams of a power socket 1 according to various embodiments of the invention. The power sockets 1 depicted in Figs. 2 to 4 may particularly be implemented as described and explained in conjunction with the power socket 1 of Fig. 1.

The power socket 1 of Figs. 2 to 4 has a power supply interface 3 connected to an external power supply 4. The external power supply 4 provides electrical power to be retrieved by an electrical device 6, such as a PED, plugged in a power outlet 5 of the power socket 1. The wireless communication module 7 of each of the power sockets 1 depicted in Figs. 2 to 4 is coupled to a manual control element 8 that may be manually activated or operated by a user of the power socket 1, such as the passenger of a vehicle that employs the power socket 1. The wireless communication module 7 is in continuous or temporary wireless communication WC with a wireless receiver 9.

In the embodiment of Fig. 2, the wireless communication module 7 is electrically connected to the power supply interface 3, for example by wiring internal to the socket housing 2. Therefore, the wireless communication module 7 will obtain the electrical energy needed for its operation from the external power supply 4.

In the alternative embodiment of Fig. 3, the power socket 1 additionally comprises an electric energy storage 7a that is coupled (wired) to the wireless communication module 7. The electric energy storage 7a may for example be a battery or a rechargeable energy storage which is configured to supply electric power to the wireless communication module 7.

In a further alternative embodiment of Fig. 4, the power socket 1 additionally comprises an energy harvesting device 7b that is coupled to the wireless communication module 7. The energy harvesting device 7b is mechanically coupled to the manual control element 8 and may provide a very small amount of power for low-energy electronics, such as the wireless communication module 7. The energy harvesting device 7b is generally designed to convert motion, such as that of a user operating the manual control element, wholly or partly into electrical energy used to power the wireless communication module 7. The energy harvesting device 7b may for example comprise a magnetic spring-loaded mechanism to generate electrical power based on electromagnetic induction. The energy harvesting device 7b may also comprise piezoelectric energy converters that generate electric current from mechanical stress imparted on the piezoelectric material.

The energy harvesting device 7b is generally configured to transform kinetic energy generated by a user actuating the at least one manual control element 8 to electric energy for the wireless communication module 7.

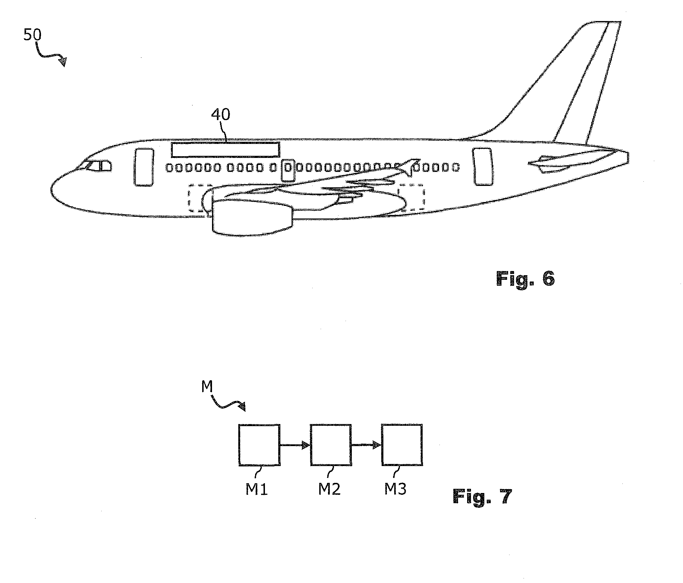

Fig. 5 schematically shows an illustration of a part of a cabin environment 40 in which a number of vehicle seats 10 with integrated power sockets 1 is arranged. The cabin environment 40 may particularly be suitable for arrangement within an aircraft, such as the aircraft 50 exemplarily depicted in Fig. 6.

For purposes of illustration, the integrated power sockets 1 are shown at various integration locations of the seats 10 in Fig. 5, however, other types of implementation an arrangement may equally be possible for the setup of the vehicle seats 10 in Fig. 5. The vehicle seats 10 may for example be installed in a passenger cabin of an aircraft with multiple seats. Each of the vehicle seats 10 may comprise armrests 11, headrests or backrests 12 at which a power socket 1 may be installed or arranged. The power sockets 1 may be used to charge a battery of a PED 6a or to provide a PED 6b with stationary power.

Of course, it may also be possible to arrange the power sockets 1 at different positions at or in the vicinity of the vehicle seat 10. For example, the power socket 1 may also be integrated into a seat belt clasp of a seat belt of the vehicle seat 10. In such a case, the power socket 1 may comprise an energy harvesting device 7b that is further configured to transform kinetic energy generated by a user actuating the seat belt clasp to electric energy for the wireless communication module 7.

The cabin environment 20 further comprises at least one wireless receiver 9 installed in the aircraft passenger cabin. The wireless receivers 9 may be placed strategically in the cabin so that the distance between the power sockets 1 wireless receivers 9 may remain small in each case. The wireless receivers 9 are generally configured to wirelessly receive control signal transmitted by the wireless communication modules 7 of the power sockets 1. Those control signals are then relayed to an aircraft server 30 coupled to the wireless receivers 9.

In the case of BTLE receivers 9, there may be a central wireless communication controller 20 that aggregates the various signals from the wireless receivers 9 and passes them on to the aircraft server 30, for example via an Ethernet connection. However, it may equally be possible for the wireless communication modules 7 to directly communicate with the aircraft server 30, for example via a WLAN connection.

The aircraft server 30 then processes the control signals of the wireless communication modules 7 according to the content of the control signals. The software for localisation of the wireless communication modules 7, for example of BTLE beacon transmitters, and for network management may be operated on the aircraft server 30.

The wireless communication modules 7 may be used to wirelessly transmit user commands to the aircraft server 30, for example PAX calls or activation of the overhead reading light. The wireless communication modules 7 may send their identification code in periodic updates. The aircraft server 30 has a mapping table for the identification codes of the wireless communication modules 7 that maps each module 7 to a specific vehicle seat 10. That way, a control signal set off by a specific wireless communication module 7 may be associated with a corresponding seat 10. The aircraft server 30 may then alert a flight attendant responsible for that very seat, if a PAX call has been wirelessly received. Alternatively, the aircraft server 30 may send an activation signal to an overhead reading light of the seat for which a light activation control signal has been received wirelessly.

It may further be possible to provide additional information via different content field of the control signal packets sent by wireless communication module 7. For example, a passenger may select one of a plurality of list items presented to him via a display at his seat. The wireless communication module 7 may then send the respective selection encoded in the wirelessly transmitted control signal according to a given GATT profile. The aircraft server 30 will have a corresponding mapping table in its repository to decode the control signal and initiate an associated action. For example, a passenger may select an on-board meal from a list of meals served on an aircraft flight. The aircraft server 30 will alert a flight attendant according to the selection of the passenger.

Fig. 7 shows a schematic illustration of a method M for operating a power socket. For example, the method M may be used with a power socket 1 such as the one illustrated in and explained in conjunction with Figs. 1 to 4. The method M may be particularly employed for integrated power sockets in vehicle seats, such as the vehicle seat 10 in Fig. 5. The method M may specifically be suited for employment and performance in aircraft for power sockets installed in aircraft seats, such as the seats in the aircraft 50 as illustrated in Fig. 6.

The method M comprises at M1 providing electric power to an electric device via a power outlet arranged within a socket housing of the power socket. At M2, a manual activation of at least one manual control element arranged in the socket housing is detected. If such manual activation is detected, at least one control signal is wireless transmitted at M3 to a wireless receiver via a wireless communication module arranged within the socket housing.

The embodiments of the invention are particularly useful for enhancing existing IFE systems in legacy long range aircraft. Passengers are conveniently able to read the PAX call and reading light from their seat without having to operate control elements on the bottom surface of the overhead compartments. Moreover, it is not necessary to provide for a fixed cabling or wiring of the seats to the reading lights via a preinstalled IFE network.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. In particular, the embodiments and configurations described for the power sockets can be applied accordingly to the aircraft or spacecraft according to the invention and the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference signs

- 1: Power socket
- 2: Socket housing
- 3: Power supply interface
- 4: External power supply
- 5: Power outlet
- 6: Electrical device
- 6a: PED
- 6b: PED
- 7: Wireless communication module
- 7a: Energy storage module
- 7b: Energy harvesting device
- 8: Manual control element
- 8a: Slider
- 8b: Pushbutton
- 9: Wireless receiver
- 10: Vehicle seat
- 11: Armrest
- 12: Backrest
- 20: Wireless communication controller
- 30: Aircraft server
- 40: Cabin environment
- 50: Aircraft
- M: Method
- M1: Method step
- M2: Method step
- M3: Method step
- WC: Wireless communication

## Claims

1. Power socket (1), comprising:
a socket housing (2);
a power supply interface (3) configured to receive electrical power from an external power supply (4);
a power outlet (5) arranged within the socket housing (2) and configured to provide electrical power received from the external power supply (4) to an electrical device (6) plugged in at the power outlet (5);
a wireless communication module (7) arranged within the socket housing (2);
and
at least one manual control element (8) connected to the wireless communication module (7) and arranged in the socket housing (2), the manual control element (8) being configured to control the wireless communication module (7) to wirelessly transmit at least one control signal upon manual activation to a wireless receiver (9).

2. Power socket (1) according to claim 1, wherein the at least one manual control element (8) comprises one or more of a slider (8a) and a pushbutton (8b).

3. Power socket (1) according to one of the claims 1 and 2, wherein the wireless communication module (7) comprises a Bluetooth® Low Energy transmitter.

4. Power socket (1) according to one of the claims 1 to 3, wherein the wireless communication module (7) is electrically connected to the power supply interface (3).

5. Power socket (1) according to one of the claims 1 to 3, further comprising:
an electric energy storage (7a) coupled to the wireless communication module (7) and configured to supply electric power to the wireless communication module (7).

6. Power socket (1) according to one of the claims 1 to 3, further comprising:
an energy harvesting device (7b) coupled to the wireless communication module (7) and configured to transform kinetic energy generated by a user actuating the at least one manual control element (8) to electric energy for the wireless communication module (7).

7. Vehicle seat (10), comprising a power socket (1) according to one of the claims 1 to 6.

8. Vehicle seat (10) according to claim 7, further comprising:
a seat belt with a seat belt clasp,
wherein the power socket (1) is integrated into the seat belt clasp.

9. Vehicle seat (10) according to claim 8, wherein the power socket (1) is a power socket (1) according to claim 6, and wherein the energy harvesting device (7b) is further configured to transform kinetic energy generated by a user actuating the seat belt clasp to electric energy for the wireless communication module (7).

10. Aircraft (50), comprising at least one vehicle seat (10) according to one of the claims 7 to 9.

11. Aircraft (50) according to claim 10, further comprising:
at least one wireless receiver (9) installed in an aircraft passenger cabin of the aircraft and configured to wirelessly receive the at least one control signal transmitted by the wireless communication module (7) of the power socket (1); and
an aircraft server (30) coupled to the at least one wireless receiver (9) and
configured to process the at least one control signal.

12. Aircraft (50) according to claim 11, wherein the at least one wireless receiver (9) is a Bluetooth® Low Energy receiver.

13. Method (M) for operating a power socket (1), the method (M) comprising:
providing (M1) electric power to an electric device (6) via a power outlet (5) arranged within a socket housing (2) of the power socket (1);
detecting (M2) a manual activation of at least one manual control element (8) arranged in the socket housing (2); and
wirelessly transmitting (M3) at least one control signal upon the detected manual activation to a wireless receiver (9) via a wireless communication module (7) arranged within the socket housing (2).
